**Europäisches Patentamt**

**European Patent Office**

**Office européen des brevets**

(19)

(11) Veröffentlichungsnummer : **0 335 890 B1**

(12) **EUROPÄISCHE PATENTSCHRIFT**

(45) Veröffentlichungstag der Patentschrift :
**03.06.92 Patentblatt 92/23**

(51) Int. Cl.$^5$ : **H02G 3/08, H01R 13/58**

(21) Anmeldenummer : **88900069.1**

(22) Anmeldetag : **12.12.87**

(86) Internationale Anmeldenummer :
**PCT/DE87/00590**

(87) Internationale Veröffentlichungsnummer :
**WO 88/04853 30.06.88 Gazette 88/14**

(54) **ELEKTRODOSE FÜR KABELVERBINDUNGEN, INSBESONDERE FÜR KABELKANÄLE.**

(30) Priorität : **16.12.86 DE 3642895**

(43) Veröffentlichungstag der Anmeldung :
**11.10.89 Patentblatt 89/41**

(45) Bekanntmachung des Hinweises auf die
Patenterteilung :
**03.06.92 Patentblatt 92/23**

(84) Benannte Vertragsstaaten :
**AT BE CH DE FR GB IT LI NL SE**

(56) Entgegenhaltungen :
**FR-A- 2 432 234**
**FR-A- 2 516 711**
**US-A- 4 514 027**

(73) Patentinhaber : **MANFRED DAHL GMBH & CO
KG
Nussbaumweg 25
W-5064 Rösrath (DE)**

(72) Erfinder : **DAHL-BETTERMANN-WINAND,
Ursula
Wiesenweg 39
W-5064 Rösrath (DE)**

(74) Vertreter : **Bauer, Wulf, Dr.
Wolfgang-Müller-Strasse 12
W-5000 Köln 51 (Marienburg) (DE)**

EP 0 335 890 B1

**Beschreibung**

Die Erfindung bezieht sich auf eine Elektrodose für Kabelverbindungen nach dem Oberbegriff des Patentanspruchs 1.

Elektrodosen dieser Art werden in den Kanalinnenraum von unterschiedlichen Kabelkanälen, beispielsweise Brüstungskanälen, eingesetzt. Sie haben hierfür spezielle Befestigungseinrichtungen, beispielsweise mit Schlitzungen versehene Beine, die über einen profilierten Vorsprung im Innenhohlraum geklippst werden können. Sie sind für die Aufnahme von Geräten, beispielsweise Schalter, Steckdosen oder dergleichen vorgesehen, können aber auch als Abzweigdosen, Verteilerdosen usw. Verwendung finden. Für die Einführung eines Kabels in ihren Innenraum ist die Ausnehmung vorgesehen.

Bei der aus der FR-A-2 432 234 vorbekannten Elektrodose der eingangs genannten Art hat die zum oberen, freien Rand der Seitenwand hin offene Ausnehmung die Form eines Halbmondes, eine entsprechende Form ist im Deckel vorgesehen. Als Zugentlastung befinden sich im Innenraum der Dose zwei in Draufsicht V-förmig angestellte Flügel, die zwischen sich einen sich V-förmig nach unten verjüngenden und mit Rückhaltemitteln versehenen Spalt ausbilden, der der Klemmung eines von oben eingedrückten Kabels dient, dabei wird das Kabel im weitgehend unelastischen Spalt deutlich eingeschnürt. Diese im Abstand von der Seitenwand befindliche Zugentlastung benötigt Platz innerhalb des Innenraums der Dose, dieser Raum geht für die Herstellung von Verbindungen im Innenraum verloren.

Aus der FR-A-2 516 711 ist eine Anschlußklemme für einzelne Adern eines Kabels bekannt, bei der die Adern zur Herstellung des elektrischen Kontaktes nicht entisoliert werden müssen. Um die Ader in der Anschlußklemme festlegen zu können und dadurch eine Zugentlastung zu erreichen, ist im Kunststoffkörper der Anschlußklemme ein sich oberhalb der elektrischen Anschlußteile befindlicher Schlitz vorgesehen, durch den die anzuschließende Ader geführt wird. Er hat einen im wesentlichen kreisrunden Eintrittsbereich, der größer bemessen ist als der Außendurchmesser der Ader und einen sich hieran anschließenden Haltebereich, dessen lichte Breite kleiner ist als der Durchmesser der Ader. Die Anschlußklemme ist aus einem an sich harten Kunststoff hergestellt, seitlich der Ausnehmung ist eine Schlitzung vorgesehen, die nur durch einen schmalen Steg von der Ausnehmung getrennt ist. Hierdurch wird der Wand der Ausnehmung dadurch eine Elastizität verliehen, daß die Schlitzung beim Einpressen der Ader in die Ausnehmung enger wird.

Ausgehend von der Elektrodose der eingangs genannten Art liegt der Erfindung die Aufgabe zugrunde, die Elektrodose so auszubilden, daß sich eine getrennte Zugentlastung erübrigt und der elektrische Anschluß an die Adern der Kabel bequemer und in kürzerer Zeit durchgeführt werden kann.

Diese Aufgabe wird gelöst durch eine Elektrodose mit den Merkmalen des Patentanspruchs 1.

Die Seitenwände der Ausnehmung sind einerseits mit den Rückhaltevorsprüngen versehen und andererseits elastisch, wodurch sie das mehradrige Kabel, wenn es in die Ausnehmung eingedrückt wird, festhalten können. Durch die neben den Seitenwänden der Ausnehmung, aber getrennt von dieser Ausnehmung vorgesehenen Schlitzungen wird erreicht, daß die Seitenwände der Ausnehmung auch bei Verwendung eines hart eingestellten Kunststoffes eine Elastizität aufweisen, so daß sie beim Eindrücken eines Kabels in die sich zum Boden hin V-förmig verjüngende Ausnehmung etwas breiter werden, also eine elastische Klemmung des Kabels erzielt wird.

Anders ausgedrückt wird durch die Schlitzung erreicht, daß zwischen der zugehörigen Seitenwand der Ausnehmung und der Schlitzung ein wenige Millimeter breiter Steg an Kunststoffmaterial bleibt, der aufgrund seiner geringen Breite eine gewisse Elastizität in der Ebene der betreffenden Seitenwand aufweist. Diese Elastizität wird einerseits für das Eindrücken des Kabels in die Ausnehmung genutzt, andererseits bewirkt sie eine Federkraft, die das einmal eingedrückte Kabel elastisch zwischen den Rückhaltevorsprüngen hält.

Die erfindungsgemäße Elektrodose ermöglicht somit eine deutlich vereinfachte Verdrahtung und einen vereinfachten elektrischen Anschluß. Die Verdrahtung kann außerhalb der Elektrodose erfolgen, beispielweise kann ein Schalter an die Leiter eines Kabel angeschlossen werden, bevor das Kabel in die Ausnehmung eingedrückt ist. Erst nach Herstellen der elektrischen Verbindungen wird das Kabel in die Ausnehmung eingedrückt und dort permanent gehalten. Hierdurch erspart man nur für die Montage benötigte, längere Anschlußenden, die später mühsam im Innenraum der Dose untergebracht werden können.

Darüberhinaus ermöglicht die erfindungsgemäß ausgebildete Elektrodose eine Zugentlastung der in die Ausnehmung eingedrückten Kabel. Aufgrund einer Tannenbaumschlitzung wird nicht nur verhindert, daß die einmal eingedrückten Kabel aus der Ausnehmung herausrutschen können, es wird auch erreicht, daß die eingelegten Kabel in Kabellängsrichtung nicht mehr bewegt werden können. Separate Zugentlastungsmittel, beispielsweise Tüllen oder dergleichen, werden so überflüssig.

In bevorzugter Weiterbildung der Erfindung hat der. Eintrittsbereich der Ausnehmungen einen abgerundeten Verlauf seiner Seitenwände, ausgehend von einer in Nähe des Randes befindlichen Engstelle weitet er sich zu einem Fixierungsbereich aus, in den ein Kabel für eine vorläufige Fixierung eingedrückt werden kann. Das so vorläufig fixierte Kabel kann auch einfach wieder aus der Ausnehmung völlig herausgenommen werden. Der Fixierungsbereich dient nicht dem permanenten Halt und einer Zugentlastung des Kabels, sondern bewirkt eine Fixierung des Kabels, während die elektrischen Anschlüsse durchgeführt werden. Insofern wird eine Art Lehre ausgebildet, die eine beim Anschließen der Kabel praktische Positionierung der Kabel in ihrer richtigen Stellung ermöglicht. Wenn die elektrischen Anschlüsse durchgeführt sind, werden die einzelnen Kabel weiter in die Ausnehmung hineingedrückt, sie gelangen dann in den Klemmbereich, wo sie durch die Haltevorsprünge fixiert und zugentlastet werden.

Vorteilhafterweise sind auch auf mindestens einer Seite der Engstelle kürzere Schlitzungen vorgesehen, die die Wände der Engstelle elastisch nachgiebig machen, so daß ein Kabel durch die Engstelle in den Fixierungsbereich gedrückt werden kann. Diese Schlitzungen können zugleich benutzt werden, um den Deckel der Dose festzuhalten, hierzu hat der Deckel an seiner Innenseite nach innen weisende Vorsprünge, die in die Schlitzungen der Engstelle einrasten.

Der Deckel selbst hat vorzugsweise im Bereich der Ausnehmungen vorstehende Fahnen, die Sollbruchstellen haben. Bei geschlossenem Deckel liegen diese Fahnen mit ihrer freien Kante am in der Ausnehmung befindlichen Kabel an und verhindern ergänzend zu den Rückhaltevorsprüngen, daß das Kabel aus den Ausnehmungen herausgelangen kann. Sie ermöglichen zudem einen berührungssicheren Abschluß der Ausnehmungen, indem sie diese zwischen Kabel und dem Eintrittsbereich verdecken.

Auch die Schlitzungen, die die Elastizität der Seitenwände der Ausnehmung gewährleisten, können verdeckt ausgebildet sein, so daß ein direkter Durchgriff in den Innenraum der Dose durch sie nicht möglich ist.

Durch die Ausnehmungen wird die mechanische Festigkeit der Seitenwand beeinträchtigt, dies gilt insbesondere dann, wenn pro Seitenwand zwei Ausnehmungen vorgesehen sind. Gegenüber der vorbekannten Elektrodose, die einen durchgehenden, ununterbrochenen Rand der Seitenwände hat, sind die Seitenwände durch die Ausnehmungen unterteilt, so daß sie eine gewisse Elastizität aufweisen. Um diese zu verringern, wird vorgeschlagen, Aussteifungen vorzusehen, die insbesondere die zwischen zwei Ausnehmungen befindlichen Seitenwandbereiche dreieckförmig mit dem Boden verbinden und gegenüber dem Boden abstützen.

Insgesamt bringt die Erfindung eine deutliche Vereinfachung bei der Herstellung der elektrischen Anschlüsse, weil die Dose als eine Art Lehre benutzt werden kann, in die die zu verbindenden oder anzuschließenden Kabel vorläufig eingelegt werden können. Darüberhinaus bieten die mit den Rückhaltevorsprüngen versehenen Klemmbereiche der Ausnehmung eine sichere, dauerhafte. Fixierung auch in Kabelrichtung, wodurch zusätzlich Zugentlastungseinrichtungen entfallen. Auch hier wird die Montage vereinfacht, weil keine zusätzlichen Teile benötigt werden. Schließlich ist es nicht mehr notwendig, lange Leiterenden im Innenraum der Dose zu verstauen.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In der Zeichnung zeigen:

Fig. 1 eine perspektivische Darstellung einer Elektrodose nach eine bevorzugten Ausgestattung der Erfindung,

Fig. 2 eine Seitenansicht auf eine Elektrodose ähnlich Fig. 1,

Fig. 3 ein Schnitt entlang der Schnittlinie III-III in Fig. 2 und

Fig. 4 ein Schnittbild durch eine Ausnehmung mit zwei seitlichen Schlitzungen, die verdeckt sind und

Fig. 5 eine Seitenansicht ähnlich Fig. 2 eines zweiten Ausführungsbeispiels.

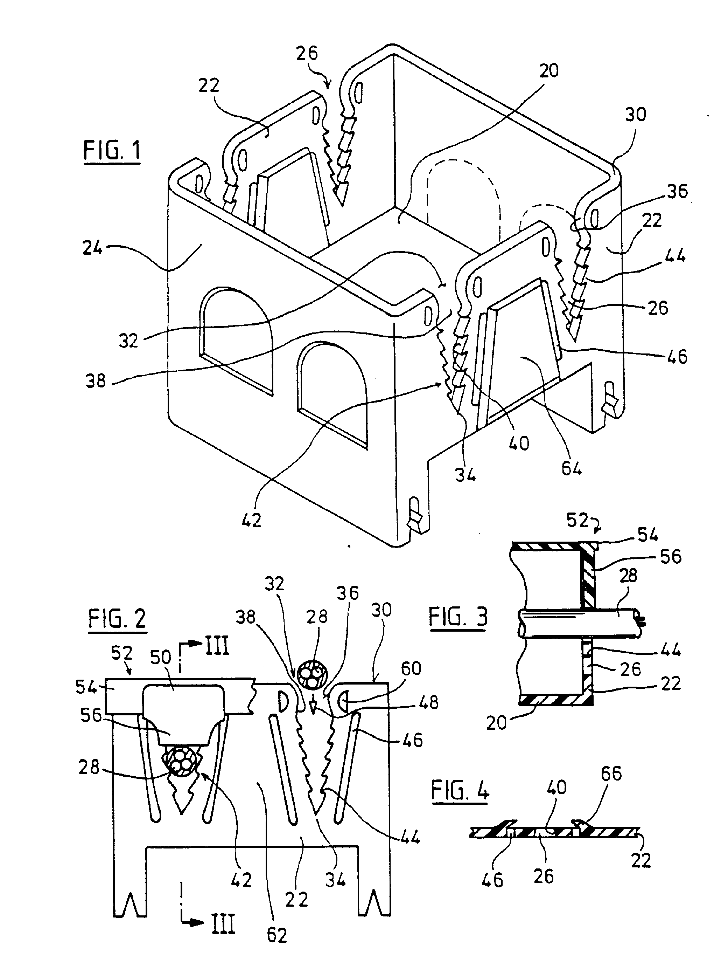

Die in Fig. 1 gezeigte Elektrodose ist als Gerätedose oder Verbindungsdose für Kabelkanäle vorgesehen, sie hat zwei untere, durchlaufende Füße, die nach unten in eine hinterschnittene Aufnahmerille offen sind. Die beiden Aufnahmerillen werden jeweils auf eine Leiste des Profils aufgedrückt, hierdurch wird die Elektrodose im Kabelkanal befestigt.

Die Dose selbst besteht einstückig aus einem quadratischen Boden 20 und vier Seitenwänden 22, 24, von denen gegenüberliegende Seitenwände jeweils indentisch ausgebildet sind. Die beiden Seitenwände 22 haben jeweils zwei Ausnehmungen 26 für die Durchführung von jeweils einem Kabel 28 in den Innenraum der Dose. Diese Ausnehmungen werden weiter unten eingehend beschrieben. Die beiden anderen Seitenwände 24 sind mit halbbogenförmigen Durchdrückbereichen ausgestaltet. Diese Durchdrückbereiche können entfernt werden, in die dabei gebildeten Fenster kanne eine entsprechend geformte Gummitülle eingedrückt werden.

Die Ausnehmungen 26 sind jeweils identisch ausgebildet, sie sind zum oberen, freien Rand 30 der Seitenwand 22 hin in einem Eintrittsbereich 32 offen und verjüngen sich generell von diesem Eintrittsbereich 32 zu ihrem unteren Endbereich 34, wo sie spitz zulaufen. Die Ausnehmungen 26 haben beginnend vom Rand 30 zunächst eine Engstelle 36, an die sich - weiter nach unten gehend - ein weiter ausgebauchter Bereich anschließt, der im folgenden Fixierungsbereich 38 genannt wird. Im Bereich der Engstelle 36 und dem Fixierungsbereich 38 sind die Wände 40 der Ausnehmung 26 etwa S-förmig gekrümmt, jedenfalls verlaufen sie gerundet.

Unterhalb des Fixierungsbereichs beginnt ein Profilbereich mit Tannenbaumprofil, im folgenden Haltebereich 42 genannt. Hier verlaufen die beiden Wände 40 der Ausnehmung 26 im wesentlichen V-förmig auf den unteren Endbereich 34 zu, von ihnen springen aber abgerundete, nasenförmige Rückhaltevorsprünge 44 vor, die einen Sägezahnverlauf ausbilden und allgemein schräg nach unten zum Boden 20 gerichtet sind. Sie sind so angeordnet, daß ein Kabel 28, das zum unteren Endbereich 34 hin gedrückt wird, auf ihrenlängeren Sägezahnflanken zur Anlage kommt und dadurch gut zum unteren Endbereich 34 hin in den Haltebereich 42 der Ausnehmung 26 eingedrückt werden kann. Will man das Kabel 28 aber in Gegenrichtung hierzu wieder zum Eintrittsbereich 32 hin anheben, so kommen die kürzeren Sägezahnflanken zur Wirkung, die sich dieser Bewegung entgegensetzen und das Kabel 28 somit festhalten.

Nur auf einer Seite jeder Ausnehmung 26, und zwar auf der gemeinsam zugewandten Seite, befindet sich in Nähe der benachbarten, gezackten Wand 40, aber getrennt hiervon, eine Schlitzung 46, die etwa 2 mm breit ist und dem gesamten Verlauf der Wand 40 im Haltebereich 42 folgt. Zwischen ihr und dem Haltebereich 42 bleibt ein schmaler, elastischer Steg an Material stehen, der etwa 5 mm im Mittel breit ist. Die Wandstärke der Seitenwand 22 liegt bei etwa 2,5 mm, die Dose ist aus einem hart eingestellten Kunststoff, beispielsweise Polystyrol oder PVC hart gefertigt.

Durch die Schlitzung 46 haben die beiden einander benachbarten Wände 40 jeder Seitenwand 22 eine Nachgiebigkeit quer zur Längsrichtung der Schlitzung 46, wie dies im einzelnen aus Fig. 2 deutlich wird.

In Fig. 2 ist oberhalb des Eintrittsbereichs 32 der rechten Ausnehmung 26 ein Kabel 28 gezeigt, das im Sinne des Pfeils 48 in die rechte Ausnehmung 26 hineingedrückt werden soll. Es handelt sich um einen dreiadriges Kabel mit starren Kupferleitern 1,5 mm$^2$.

Im Unterschied zur Ausbildung gemäß Fig. 1 sind im Ausführungsbeispiel nach Fig. 2 im Abstand von wenigen Millimetern zu beiden Wänden 40 des Haltebereichs 42 Schlitzungen 46 vorgesehen, die wiederum eine Breite von etwa 2 mm und eine Länge haben, die der Gesamtlänge der benachbarten Wand 40 im Haltebereich 42 entspricht.

In die linke Ausnehmung 26 gemäß Fig. 2 ist bereits ein entsprechendes Kabel 28 eingedrückt, beim Eindrücken ist der V-förmige Haltebereich 42 nach außen gespreizt worden, die Schlitzungen 46 haben nachgegeben und sind enger geworden. Das Kabel 28 wird durch die elastische Rückstellkraft der Stege zwischen der Wand 40 und der Schlitzung 46 von links und rechts gepreßt, so daß es gehalten ist. Aufgrund des Sägezahnprofils führt der seitliche Preßdruck nicht dazu, daß das Kabel nach oben entweichen kann.

Das beschriebene Kabel 28 in der linken Ausnehmung 26 ist zusätzlich durch einen Vorsprung 50 eines Deckels 52 gesichert. Vom Rand 54 des Deckels 52 springen parallel zum Rand 54 Fahnen 56 vor, die markierte, in unterschiedlicher Höhe angeordnete Sollbruchstellen haben. Die entsprechende Sollbruchstelle für dreiadrige NYM-Kabel ist durchgebrochen worden, die abgebroche, untere freie Fläche der Fahne 56 liegt oben auf dem ohnehin fixierten Kabel 28 auf und sichert zusätzlich noch dessen Halt in der Ausnehmung 26, insbesondere bei Bewegungen, Vibrationen oder dergleichen des Kabels 28.

Die Fahne 56 ragt, wie insbesondere aus Fig. 3 ersichtlich ist, in den Bereich der Ausnehmung 26 hinein und füllt dessen Hohlraum oberhalb des Kabels 28 nahezu vollständig aus. Hierdurch ist auch sichergestellt, daß der oberhalb des Kabels 28 verbliebene Bereich der Ausnehmung 26 abgedeckt ist und der Innenraum der Dose durch diese Öffnung nicht zugänglich ist.

Die Ausbildung der Fahne 56 ist grundsätzlich beliebig, diese Fahnen können auch mit den Sägezähnen der Wand 40 des Haltebereichs 42 zusammenwirken. Eine Ausbildung der Ausnehmungen 26 ist auch durch eine andere Art von Rückhaltervorsprüngen möglich. Entscheidend ist nur, daß ein ausreichender Klemmeffekt, beispielsweise durch Selbsthemmung, des Kabels 28 im V-förmig verlaufenden Haltebereich 42 erzielt wird.

Der lichte Abstand der Wände 40 im Bereich der Engstelle 36 ist kleiner als der Außendurchmesser des Kabels 28. Um das Kabel 28 im Sinne des Pfeils 48 durch die Engstelle 36 der rechten Ausnehmung 26 in Fig. 2 drücken zu können, sind auch die Wände 40 im Bereich der Engstelle 36 elastisch nachgebend ausgebildet, indem im Abstand von wenigen Millimetern seitlich von ihnen eine Schlitzung 60 vorgesehen ist, die diesmal Kreissegmentform hat. Aufgrund der der jeweiligen Wand 40 der Engstelle 36 zugewandten Krümmung der Schlitzung 60 wird erreicht, daß zwischen dieser Wand 40 und der Schlitzung 60 ein Bereich an Material verbleibt, der etwa konstante Stärke, hier etwa 3,5 mm Wandstärke, hat. Aufgrund dieser geringeren Wandstärke lassen sich die Wände 40 im Bereich der Engstelle 36 leichter einpressen als im Haltebereich 42.

Wird das Kabel 28 durch die Engstelle 36 hindurchgepreßt, so gelangt es in den Fixierungsbereich 38. Hier wird es praktisch nur quer zu seiner Kabelachse, nicht aber in Richtung der Kabelachse, gehalten. In der Fixierungsposition kann das Kabel 28 an ein anderes Kabel oder ein elektrisches Gerät angeschlossen werden. Sind diese Arbeiten beendet, wird das Kabel 28 im Sinne des Pfeils 48 weiter in die Ausnehmung 26 hineingepreßt, bis es die Lage hat, wie sie in Fig. 2 für die linke Ausnehmung 26 gezeichnet ist. Dieser Zustand ist der fertige Montagezustand.

Zwischen den beiden Ausnehmungen 26 jeder Seitenwand 22 bleibt ein Seitenwandbereich 62 stehen, der im wesentlichen-nur noch mit dem Boden 20, nicht aber mit den Seitenwandteilen 22 auf der anderen Seite der Ausnehmung 26 verbunden ist. Hier besteht die Gefahr, daß dieser Seitenwandbereich quer zu seiner Hauptfläche zu elastisch ist, wodurch wiederum der Halt eines Kabels 28 in den beiden Ausnehmungen 26 beeinträchtigt werden könnte. Um den Seitenwandbereich 62 ausreichend abzustützen, sind Vorsprünge 64 vorgesehen. Sie können die in Fig. 1 gezeigte Trapezform haben, es sind aber auch dreieckförmige Abstützungen möglich, die die Innenwand des Seitenwandbereichs 62 mit dem Boden 20 verbinden.

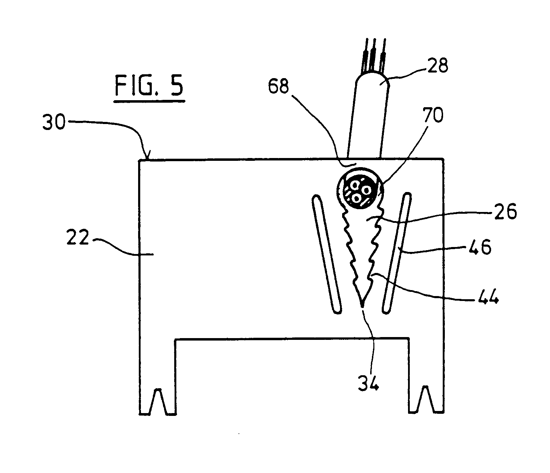

Im Ausführungsbeispiel nach Fig. 4 übergreifen Nasen 66 auf der Doseninnenseite die Schitzungen 46, die hierdurch in ihrer Funktion nicht beeinträchtigt werden, aber nunmehr verdeckt sind. Aus dieser Figur ist auch ersichtlich, daß die Wände 40 der Ausnehmung 26 V-förmig verlaufen, sie konvergieren zur Innenseite der Dose hin. Hierdurch wird ein Herausziehen des Kabels 28 aus der Dose zusätzlich erschwert.

Im Ausführungsbeispiel nach Fig. 5 ist die Ausnehmung 26 nicht zum oberen Rand 30 hin offen, sondern durch einen Steg 68 getrennt, der mit seiner unteren Wandung die Ausnehmung 26 nach oben abschließt, so daß die Ausnehmung eine allseitig begrenzte Öffnung ist. Dies hat den Vorteil, daß die mechanische Stabilität der Elektrodose weit weniger beeinträchtigt wird, als dies durch die nach oben offenen Ausnehmungen im Ausführungsbeispiel nach den Figuren 1 bis 4 der Fall ist. Dafür lassen sich die Kabel 26 nun nicht mehr von oben in die oben offene Ausnehmung 26 eindrücken, wie dies im Ausführungsbeispiel nach den Figuren 1 bis 4 der Fall ist. Die Kabel 28 müssen daher, bevor sie miteinander verbunden werden, durch die nach oben geschlossene Ausnehmung 26 gemäß Fig. 5 eingefädelt werden. Da diese Ausnehmung 26 aber unterhalb des Steges 68 einen kreisähnlichen Aufnahmebereich 70 oder Ausgangsbereich hat, dessen lichter Innendurchmesser deutlich (siehe Fig. 5), z. B. 30 bis 50 %, größer ist als der Außendurchmesser des verwendeten Kabels 28, ist einerseits das Einfädeln erleichtert und kann andererseits die Verbindung des gezeigten Kabels 28 mit weiteren Kabeln doch weitgehend außerhalb und oberhalb des Innenraums der Elektrodose erfolgen, weil jedes Kabel 28 zunächst - bevor die Verbindung mit den anderen Kabeln erfolgt ist - innerhalb des Aufnahmebereichs 70 (wie in Fig. 5 gezeichnet) verbleibt, dort aber frei innerhalb dieses Teils der Ausnehmung 26 verschwenkt werden kann, so daß die Verbindung mit anderen Kabeln 28 bequem und oberhalb des Randes 30 erfolgen kann, wie dies in Fig. 5 dadurch angedeutet ist, daß das Kabel 28 mit seinem oberhalb der Elektrodose befindlichen Bereich sich oberhalb dieser Elektrodose befindet, also in der Zeichnung nach Fig. 5 schräg nach hinten oben vorsteht. Dort, oberhalb der Dose, werden die Verbindungsarbeiten ausgeführt. Sind sie abgeschlossen, wird der Verbindungsbereich der einzelnen Kabel nach unten gedrückt und werden die einzelnen Kabel 28 dadurch festgelegt, daß sie ausgehend vom Aufnahmebereich 70 in den Haltebereich 42 gedrückt werden, dieser ist ebenso ausgebildet wie der Haltebereich 42 im Ausführungsbeispiel nach den Figuren 1 bis 4. Ein Fixierungsbereich 38, wie er im Ausführungsbeispiel nach den Figuren 1 bis 4 vorgesehen ist, ist nicht notwendig, kann aber zwischen dem Aufnahmebereich 70 und dem Haltebereich 42 vorgesehen sein.

**Patentansprüche**

1. Elektrodose für Kabelverbindungen, insbesondere Gerätedose oder Verbindungsdose für Kabelkanäle,
   – die einer. Boden (20) und mindestens eine Seitenwand (22) aufweist, in der eine Ausnehmung (26) für die Durchführung eines mehradrigen Kabels (28) in den Innenraum der Dose vorgesehen ist und die einen oberen, freien Rand (30) hat, wobei die Ausnehmung (26) zum Boden (20) hin enger wird,
   – die vorzugsweise einstückig aus einem hart eingestellten Kunststoff gefertigt ist,
   – die eine Zugentlastungseinrichtung für das Kabel (28) aufweist, welche einen sich V-förmig zum Boden (20) hin verjüngenden Schlitz und Rückhaltevorsprünge (44) hat, und
   – die durch einen Deckel (52) verschließbar ist, dadurch gekennzeichnet, daß die Ausnehmung (26) zum Einlegen und Befestigen des Kabels (28) unterschiedliche Teilbereiche (32, 34, 38, 42) aufweist und sich in ihrer lichten Öffnungsweite ausgehend von einem im Bereich des oberen freien Randes (30) der Seitenwand (22) befindlichem Eintrittsbereich (32) zum Boden (20) hin V-förmig verjüngt, daß der Eintrittsbereich (32) entweder zum oberen Rand (30) hin offen ist oder über einen Steg (68) geschlossen ist, daß die die Ausnehmung (26) begrenzenden Wände (40) Rückhaltevorsprünge (44) aufweisen, die eine zum Eintrittsbereich (32) gerichtete Bewegung eines eingelegten Kabels behindern, und in einer zum Boden (20) parallelen Ebene ebenfalls einen V-förmigen, zum Doseninneren konvergierenden Verlauf haben, und daß seitlich und durch einen wenige Millimeter breiten Steg getrennt von der Ausnehmung (26) in der Seitenwand (22) mindestens eine Schlitzung (46) ausgebildet ist, die bei einem Einpressen des Kabels (28) in die Ausnehmung (26) enger wird und so der wand (40) der Ausnehmung (26) eine Elastizität verleiht.

2. Elektrodose nach Anspruch 1, dadurch gekennzeichnet, daß die Ausnehmungen (26) einen Fixierungsbereich (38) mit einer am unmittelbaren Eintrittsbereich (32) vorgesehenen Engstelle (36) ausbilden, und daß an der Engstelle Schlitzungen (60) vorgesehen sind, zwischen denen ein Steg von wenigen Millimetern material zur wand (40) der Engstelle (36) verbleibt.

3. Elektrodose nach Anspruch 1 oder 2, dadurch gekennzeichnet, daß die Ausnehmung (26) einen Haltebereich (42) aufweist, der sich zwischen dem Fixierungsbereich (38) und einen unteren Endbereich (34) befindet, und daß vorzugsweise der Haltebereich (42) ein Tannenbaumprofil hat.

4. Elektrodose nach einem der Ansprüche 1 bis 3, dadurch gekennzeichnet, daß die Schlitzung (46) ein schmales Langloch ist, das dem allgemeinen Verlauf der Wand (40) des Haltebereichs (42) folgt, von dieser einen Abstand von drei bis sieben, vorzugsweise fünf Millimetern hat und in seiner Länge der Länge der Wand (40) im Haltebereich (42) entspricht.

5. Elektrodose nach einem der Ansprüche 1 bis 4, dadurch gekennzeichnet, daß die Rückhaltevorsprünge abgerundete, eine Verletzung des Kabels (28) ausschließende Nasen haben.

6. Elektrodose nach einem der Ansprüche 1 bis 5, dadurch gekennzeichnet, daß alle Kanten der Ausnehmung (26) zumindest leicht abgerundet sind, um eine Verletzung des Kabels (28) auszuschließen.

7. Elektrodose nach einem der Ansprüche 1 bis 6, dadurch gekennzeichnet, daß ihr Deckel (52) eine mit einer Ausnehmung (36) zusammenwirkende Fahne (56) hat, die parallel zur Deckelebene verlaufende Sollbruchstellen hat.

8. Elektrodose nach einem der Ansprüche 1 bis 7, dadurch gekennzeichnet, daß ein bei mehr als einer Ausnehmung (26) pro Seitenwand (22) zwischen den Ausnehmungen (26) verbleibender Seitenwandbereich (28) durch einen Vorsprung (64) ausgesteift ist.

9. Elektrodose nach einem der Ansprüche 1 bis 8, dadurch gekennzeichnet, daß an der Innenseite des Randes (54) des Deckels (52) Noppen vorspringen, die den Schlitzungen (60) zugeordnet sind und beim Aufdrücken des Deckels (52) in diese Schlitzungen (60) elastisch einrasten.


## Revendications

1. Boîte électrique pour jonctions de câbles, notamment boîte à appareils ou boîte de jonction pour caniveaux à câbles,
   – qui présente un fond (20) et au moins une paroi latérale (22) dans laquelle un évidement (26) est prévu pour le passage d'un câble (28) multi-conducteur à l'intérieur de la boîte, et qui présente un bord libre supérieur (30), cet évidement se rétrécissant en direction du fond (20),
   – qui est de préférence fabriquée d'un seul tenant à partir de matière plastique rigide,
   – qui présente un moyen de décharge de traction pour le câble (28), qui posséde une rainure se rétrécissant en forme d'un V en direction du fond (20) et saillies de maintien (44), et
   – qui peut être fermée par un couvercle (52) caractérisée par le fait que l'évidement (26) présente différents zones (32, 34, 38, 42) pour insérer et maintenir le câble (28) et sa largeur interieure se rétrécit en partant d'une zone d'entrée (32) située dans la region du bord libre supérieur (30) en direction du fond (20) en forme d'un V, que la zone d'entrée (32) est soit ouverte vers le bord supérieur (30) soit fermée par une barette (68), que les parois (40) délimitant l'évidement (26) présentent les saillies de maintien (44), qui empêchent le mouvement d'un câble (28) mis en place en direction de la zone d'entrée (32) et dans un plan parallèle au fond (20) ont aussi une allure convergente vers l'intérieur de la boîte, et qu'au moins une fente (46) se trouve sur le côté et séparée par une barrette de quelques millimètres de largeur de l'évidement (26) pratiqué dans la paroi latérale (22), laquelle fente (46) devient plus étroite lors du pressage du câble (28) dans l'évidement (26) et confère ainsi une élasticité à la paroi (40) de l'évidement.

2. Boîte électrique selon la revendication 1, caractérisée par le fait que les évidements (26) forment une zone de fixation (38) avec un rétrécissement (36) prévu sur la zone d'entrée (32) immédiate et que ce rétrécissement comporte des fentes (60) entre lesquelles subsiste une barrette de quelques millimètres par rapport à la paroi (40) du rétrécissement (36).

3. Boîte électrique selon la revendication 1 ou 2, caractérisée par le fait que l'évidement (26) présente une zone de maintien (42) qui se trouve entre la zone de fixation (38) et une zone terminale inférieure (34) et que la zone de maintien (42) a de préférence un profil en forme de sapin.

4. Boîte électrique selon l'une des revendications 1 à 3, caractérisée par le fait que la fente (46) est un trou oblong étroit qui suit la paroi (40) de la zone de maintien (42), que cette fente est écartée de cette zone de trois à sept, de préférence cinq millimètres et que sa longueur correspond à la longueur de la paroi (40) dans la zone de maintien (42).

5. Boîte électrique selon l'une des revendications 1 à 4, caractérisée par le fait que les saillies de maintien ont un ergot arrondi qui empêche au câble (28) d'être abîmé.

6. Boîte électrique selon l'une des revendications 1 à 5, caractérisée par le fait que toutes le arêtes de l'évi-

6

dement (26) sont au moins légèrement arrondies pour éviter que le câble (28) soit endommagé.

7. Boîte électrique selon l'une des revendications 1 à 6, caractérisée par le fait que son couvercle (52) a un talon (56) qui agit avec un évidement (36) et qui présente des points de rupture théoriques parallèles au plan du couvercle.

8. Boîte électrique selon l'une des revendications 1 à 7, caractérisée par le fait que, lors de plus d'un évidement (26) par paroi latérale (22), une zone de paroi latérale restante entre les évidements (26) est renforcée par une saillie (64).

9. Boîte électrique selon l'une des revendications 1 à 8, caractérisée par le fait que des nopes sont en saillie sur la face intérieure du bord (54) du couvercle (52), qu'elles sont affectées aux fentes (60) et qu'elles viennent s'encliqueter élastiquement dans ces fentes (60) lors de l'enfoncement du couvercle (52).

**Claims**

1. Junction box for cable connections, especially applicance box or fishing box for cable conduits, which junction box
– has a base (20) and at least one side wall (22) in which a recess (26) is provided for passing through a multi-conductor cable (28) into the interior of the box and which has an upper, free edge (30), whereby the recess (26) becomes narrower toward the base (20),
– is preferably made in one piece from a hard-formulated plastic,
– has a stress relief device for the cable (28) which has a slit tapering in a V shape toward the base (20) and has retaining projections (44), and
– can be closed by a cover (52), characterized in that the recess (26) for inserting and fastening the cable (28) has different partial regions (32, 34, 38, 42) and its opening tapers in a V-shape beginning from an entry region (32) located in the region of the upper free edge (30) of the side wall toward the base (20), that the entry region (32) is either open toward the upper edge (30) or is closed via a bar (68), that the walls (40) delimiting the recess (26) have retaining projections (44), which prevent movement of an inserted cable toward the entry region (32) and in a plane parallel to the base (20) likewise have a V-shaped course converging toward the interior of the box, and that to the side and separated by a bar a few millimeters wide from the recess (26) in the side wall (22) at least one slit (46) is formed, which becomes narrower when the cable (28) is pressed into the recess (26) and thus imparts elasticity to the wall (40) of the recess (26).

2. Junction box in accordance with Claim 1, characterized in that the recesses (26) form a fixing region (38) with a constriction (36) provided at the immediate entry region (32), and that slits are provided at the constriction, between which a bar of a few millimeters of the material remains toward the wall (40) of the constriction (36).

3. Junction box in accordance with Claim 1 or 2, characterized in that the recess (26) has a retaining region (42) located between the fixing region (38) and a lower end region (34), and that preferably the retaining region (42) has a Christmas tree profile.

4. Junction box in accordance with one of Claims 1 to 3, characterized in that the slit (46) is a narrow, elongated hole, which follows the general course of the wall (40) of the retaining region (42), has a distance of three to seven, preferably five, millimeters from this, and corresponds in length to the length of the wall (40) in the retaining region 842).

5. Junction box in accordance with one of Claims 1 to 4, characterized in that the retaining projections have rounded-off beaks to prevent damage to the cable (28).

6. Junction box in accordance with one of Claims 1 to 5, characterized in that all edges of the recess (26) are at least slightly rounded to prevent damage to the cable (28).

7. Junction box in accordance with one of Claims 1 to 6, characterized in that its cover (52) has a lug (56) interacting with a recess (36), which has indicated breakage sited paralleling the plane of the cover.

8. Junction box in accordance with one of Claims 1 to 7, characterized in that in the case of more than one recess (26) per side wall (22), a side wall region (28) remaining between the recesses (26) is stiffened by a projection (64).

9. Junction box in accordance with one of Claims 1 to 8, characterized in that the inside of the edge (54) of the cover (52) nubs project which correspond to the slits (60) and which mesh elastically into these slits (60) when the cover (52) is pressed into place.

FIG. 1

FIG. 2

FIG. 3

FIG. 4

FIG. 5